# EUROPEAN PATENT APPLICATION

(11) **EP 4 803 961 A1**
(43) Date of publication of application: **09.09.2026**
(21) Application number: 24890564.8
(22) Date of filing: 07.11.2024
(51) Int. Cl.: G03B 21/20

(54) **LASER DEVICE LIGHT SOURCE AND PROJECTION APPARATUS**

(30) Priority: 15.11.2023 CN 202323088827 U
(71) Applicant: APPOTRONICS CORPORATION LIMITED, Shenzhen, Guangdong 518000 (CN)
(72) Inventor: GUO, Zuqiang, Shenzhen, Guangdong 518000 (CN); WANG, Zeqin, Shenzhen, Guangdong 518000 (CN); BAI, Tongtong, Shenzhen, Guangdong 518000 (CN); DU, Peng, Shenzhen, Guangdong 518000 (CN); LI, Yi, Shenzhen, Guangdong 518000 (CN)
(74) Representative: Gulde & Partner
(86) International application number: PCT/CN2024/130591
(87) International publication number: WO 2025/103208

(57) **Abstract**

The present application discloses a laser device light source and a projection apparatus. The laser device light source comprises at least two groups of laser device units; each laser device unit comprises a laser chip array and a fast axis collimator lens arranged corresponding to the laser chip array, and the fast axis collimator lens is used for collimating a light beam emitted from the laser chip array in a fast axis direction; and the fast axis collimator lenses of at least one group of laser device units and the fast axis collimator lenses of the remaining laser device units have different focal lengths. In this way, the laser device light source of the present application can emit laser beams having different angles and different areas, so that the laser device light source can adapt to two or more kinds of projection apparatuses having different requirements.

## Description

### TECHNICAL FIELD

The present disclosure relates to the field of laser projection display, and in particular, to a laser light source and a projection apparatus.

### BACKGROUND

In the field of projection display, a semiconductor laser light source, as a light source device with high efficiency, high energy density and high color gamut, has always been a mainstream solution for high-performance projection apparatuses. At present, there are various combinations of array-packaged laser light sources applied in projection, which enables a projection optical engine to realize further miniaturization.

However, in existing laser light sources, the adaptability between optical etendue and the projection optical engine is not taken into consideration, and a collimated and emitted laser beam causes a loss of etendue during fly-eye homogenization. Since a beam angle emitted by a laser is single, different fly-eye homogenization causes different dilution of the optical etendue, which limits a brightness of the projection optical engine, such that there are many limitations in design of the projection optical engine.

### SUMMARY

To solve the above problems, the present disclosure provides a laser light source and a projection apparatus, aiming to solve the above problems.

To solve the above technical problems, one technical solution adopted by the present disclosure is as follows: a laser light source is provided, and the laser light source includes at least two laser units. Each of the laser units includes a laser chip array and a fast-axis collimator lens disposed corresponding to the laser chip array, and the fast-axis collimator lens is configured to collimate a light beam emitted from the laser chip array along a fast-axis direction. A focal length of the fast-axis collimator lens of at least one of the laser units is different from a focal length of the fast-axis collimator lens of at least another of the laser units.

The laser light source further includes a light source control device. The light source control device is connected to each of the laser units, and the light source control device is configured to control at least one of the laser units to operate, so as to cause light exiting angles of emitted light of the laser light source to be different.

The light source control device is configured to control at least a portion of laser chips in the laser chip array to operate, so as to cause the light exiting angles of the emitted light of the laser light source to be different.

The light source control device includes a first control unit, and the first control unit is configured to control at least a portion of the laser units to be turned on based on a light spot requirement; and/or the light source control device includes a second control unit, and the second control unit is configured to control at least a portion of the laser chips in the laser units to be turned on based on a light source brightness requirement.

The laser light source further includes a first laser unit, a second laser unit, and a third laser unit. A focal length of a fast-axis collimator lens of the first laser unit and a focal length of a fast-axis collimator lens of the second laser unit are smaller than a focal length of a fast-axis collimator lens of the third laser unit. The first control unit is configured to control the third laser unit to operate in response to a light spot formed by light beams emitted by the first laser unit and the second laser unit failing to satisfy the light spot requirement.

The second control unit is configured to control the laser chip array in the laser units to control the laser chips to operate in a manner of turning on chips incrementally from a middle to two sides based on the light source brightness requirement.

The laser light source further includes a plurality of first light redirecting members. Each of the first light redirecting members is provided in an optical path of a corresponding one of the laser units, and is configured to reflect a light beam emitted by the laser chip array in at least one of the laser units to a corresponding fast-axis collimator lens for collimation.

The laser light source is provided with a light exit port, laser beams emitted by the laser units located within a range of the light exit port pass through a corresponding fast-axis collimator lens and are emitted through the light exit port. A second light redirecting member is provided in an optical path of each of the laser units away from the light exit port, and the second light redirecting member is configured to guide a laser beam of each of the laser units away from the light exit port, after passing through a corresponding fast-axis collimator lens, into the range of the light exit port, so as to enable the laser beam of each of the laser units away from the light exit port to be emitted along the light exit port from between optical axes of the laser units located within the range of the light exit port.

The second light redirecting member includes a reflective element and a first dichroic element arranged parallel to each other. The reflective element is provided on an optical axis of a corresponding laser unit away from the light exit port, and the first dichroic element is provided between optical axes of the laser units located within the range of the light exit port and is located in a reflected optical path of the reflective element.

The laser light source includes a first laser unit, a second laser unit and a third laser unit. The first laser unit and the second laser unit are provided within the range of the light exit port, the third laser unit is provided away from the light exit port, the reflective element is correspondingly provided on an optical axis of the third laser unit, and the first dichroic element is provided at a central position between an optical axis of the first laser unit and an optical axis of the second laser unit and is located in the reflected optical path of the reflective element.

The at least two laser units include a first laser unit and a second laser unit. The first laser unit is provided within the range of the light exit port, the second laser unit is provided away from the light exit port, and a focal length of a fast-axis collimator lens of the second laser unit is greater than a focal length of a fast-axis collimator lens of the first laser unit.

The laser light source is provided with a light exit port, and the laser light source further includes a beam combining element and a plurality of third light redirecting members arranged parallel to each other. The beam combining element is provided in an optical path of one of the laser units located at the light exit port, each of the third light redirecting members is correspondingly provided in an optical path of at least another one of remaining laser units, and is configured to reflect a laser beam emitted by the at least another one of the laser units to the beam combining element and transmit laser beams emitted by other laser units and passing through the third light redirecting member, and the beam combining element is configured to combine laser beams of all the laser units and emit the combined laser beams through the light exit port.

The laser light source includes a red laser unit, a green laser unit, and a blue laser unit. A focal length of a fast-axis collimator lens of the red laser unit is smaller than a focal length of a fast-axis collimator lens of the green laser unit and a focal length of a fast-axis collimator lens of the blue laser unit.

To solve the above technical problems, another technical solution adopted by the present disclosure is as follows: a projection apparatus is provided, and the projection apparatus includes the laser light source described above.

The projection apparatus further includes a first light homogenizing device and a controller. The controller is configured to control at least a portion of the laser chips in at least a portion of the laser chip arrays in the laser light source to operate, so as to match a light receiving angle of the first light homogenizing device.

The laser chip arrays of all the laser units comprise same-color laser chips, and the projection apparatus further includes a second dichroic element, a fluorescent projection module, and a projection module. The fluorescent projection module and the projection module are arranged on two sides of the second dichroic element. Laser beams emitted by the laser light source are incident onto the second dichroic element after being homogenized by the first light homogenizing device. The second dichroic element reflects the laser beams into the fluorescent projection module, and the fluorescent projection module absorbs the laser beams and generates corresponding fluorescent light beams, and the fluorescent light beams are transmitted through the second dichroic element and emitted to the projection module. The projection module performs projection based on the fluorescent light beams. The controller is connected to the fluorescent projection module and the laser light source, and is configured to acquire the light receiving angle of the first light homogenizing device based on the fluorescent projection module and to control at least a portion of the laser chips in at least a portion of the laser chip arrays in the laser light source to operate, so as to match the light receiving angle of the first light homogenizing device.

The fluorescent projection module includes a first lens, a second lens and a color wheel. The laser beams reflected by the second dichroic element are incident onto the color wheel through the first lens and the second lens, the color wheel receives the laser beams and generates the fluorescent light beams, and the fluorescent light beams are transmitted through the first lens, the second lens and the second dichroic element and incident into the projection module.

The projection module includes a second light homogenizing device, a relay lens, a display chip, a first prism, a second prism and a projection lens. The fluorescent light beams are incident onto the relay lens after passing through the second light homogenizing device, are incident onto the first prism after passing through the relay lens, and are reflected by the first prism onto the display chip. The display chip receives the fluorescent light beams to form image light beams, and the image light beams are output to the projection lens through the first prism and the second prism.

The laser chip array of the laser unit includes different-color laser chips. The projection apparatus further includes a projection module, and the projection module includes a relay lens, a display chip, a first prism, a second prism, and a projection lens. Laser beams are incident onto the relay lens after passing through the first light homogenizing device, are incident onto the first prism after passing through the relay lens, and are reflected by the first prism onto the display chip. The display chip receives the laser beams to form image light beams, and the image light beams are output to the projection lens through the first prism and the second prism. The controller is connected to the laser light source, and is configured to control at least a portion of the laser chips in at least a portion of the laser chip arrays in the laser light source to operate based on the light receiving angle of the first light homogenizing device, so as to match the light receiving angle of the first light homogenizing device.

The present disclosure has the following beneficial effects: differing from the prior art, the laser light source according to the present disclosure includes at least two laser units. Each of the laser units includes a laser chip array and a fast-axis collimator lens disposed corresponding to the laser chip array, and the fast-axis collimator lens is configured to collimate a light beam emitted from the laser chip array along a fast-axis direction. A focal length of the fast-axis collimator lens of at least one of the laser units is different from a focal length of the fast-axis collimator lens of at least another of the laser units. In the above manner, the laser light source of the present disclosure can emit laser beams with different angles and different areas, thereby enabling the laser light source to adapt to two or more types of projection apparatuses with different requirements.

### BRIEF DESCRIPTION OF DRAWINGS

In order to more clearly illustrate the technical solutions in the embodiments of the present disclosure, the drawings required in the description of the embodiments will be briefly described below. It is clear that, the drawings in the following description are only some embodiments of the present disclosure, and for those skilled in the art, other drawings may also be obtained according to these drawings without any creative effort.
FIG. 1 is a schematic plan view of an optical path of a laser light source according to a first embodiment of the present disclosure;
FIG. 2 is a schematic plan view of an optical path of a laser light source according to a second embodiment of the present disclosure;
FIG. 3 is a schematic perspective structural diagram of a laser light source according to the second embodiment of the present disclosure;
FIG. 4 is a schematic plan view of an optical path of a laser light source according to a third embodiment of the present disclosure;
FIG. 5 is a schematic structural diagram of a laser light source according to a fourth embodiment of the present disclosure;
FIG. 6 is a schematic structural diagram of a laser light source according to a fifth embodiment of the present disclosure;
FIG. 7 is a schematic structural diagram of a projection apparatus according to a first embodiment of the present disclosure;
FIG. 8 is a schematic structural diagram of a projection apparatus according to a second embodiment of the present disclosure;
FIG. 9 is a schematic structural diagram of a projection apparatus according to a third embodiment of the present disclosure;
FIG. 10 is a schematic diagram of a fluorescent light spot on a color wheel of a projection apparatus according to the present disclosure;
FIG. 11 is a schematic structural diagram of a projection apparatus according to a fourth embodiment of the present disclosure;
FIG. 12 is a schematic structural diagram of a projection apparatus according to a fifth embodiment of the present disclosure;
FIG. 13 is a schematic structural diagram of a projection apparatus according to a sixth embodiment of the present disclosure; and
FIG. 14 is a schematic structural diagram of a projection apparatus according to a seventh embodiment of the present disclosure.

### DESCRIPTION OF EMBODIMENTS

The embodiments of the present disclosure will be described in detail below with reference to the drawings. The following embodiments are intended only to more clearly illustrate the technical solutions of the present disclosure, and are therefore used only as examples and are not intended to limit the protection scope of the present disclosure.

Unless otherwise defined, all technical and scientific terms used herein have the same meanings as commonly understood by those skilled in the art pertaining to the present disclosure. The terms used herein are only for the purpose of describing specific embodiments, and are not intended to limit the present disclosure. Terms "include" and "have" and any variations thereof in the specification and claims of the present disclosure and the above brief description of drawings are intended to cover non-exclusive inclusion.

In the description of the embodiments of the present disclosure, technical terms "first" and "second" are used only to distinguish different objects, and shall not be construed as indicating or implying relative importance, or implicitly specifying the number, specific order, or primary-secondary relationship of the indicated technical features. In the description of the embodiments of the present disclosure, "multiple" means two or more, unless explicitly and specifically defined otherwise.

References to "embodiments" mentioned herein means that particular features, structures or characteristics described in conjunction with the embodiments may be included in at least one embodiment of the present disclosure. Phrases appearing at various positions of the specification neither always refer to the same embodiment, nor separate or alternative embodiments that are mutually exclusive with other embodiments. It should be clearly and implicitly understood by those skilled in the art that the embodiments described herein may be combined with other embodiments.

In the field of projection display, a laser light source, as a light source device with high efficiency, high energy density and high color gamut, has always been a mainstream solution for high-performance projection apparatuses. At present, various combinations of array-packaged laser light sources have been applied in projection, which enables the projection apparatus to realize further miniaturization. When designing an optical engine of a projection apparatus, optical etendue of a light source is generally reversely derived from a fluorescent projection module, to obtain parameters of a light homogenizing device, and the light homogenizing device is taken as an intermediate boundary of the projection apparatus. For example, in a projection apparatus in which fluorescence is excited by blue laser, fluorescent etendue on a color wheel may be reversely derived from the fluorescent projection module, to obtain parameters of the light homogenizing device for the light source. An incident end of the light homogenizing device is adapted to a blue laser emitted light beam, and an exit end of the light homogenizing device is adapted to a collecting lens and the color wheel. The light homogenizing device may be regarded as another form of optical fiber. Therefore, different projection apparatuses take different light homogenizing devices as media, and the utilization rate of the optical etendue of the light homogenizing device directly reflects the dilution degree of the optical etendue of the light source.

However, when an existing projection apparatus uses a laser product, an angle of an emitted laser beam is very small, distributions of spot surfaces of different array-packaged laser light sources before being incident on the light homogenizing device are discontinuous, and optical etendues thereof differ from the fluorescent projection module by at least four orders of magnitude. Such a laser packaging product causes low utilization rate of the etendue of the light homogenizing device, thereby restricting further improvement of brightness. On the other hand, since the angle of the light beam emitted by the existing laser light source is single, dilution caused to etendues of different projection apparatuses is different. Waste or insufficiency in the number of laser light sources often occurs in designs for matching brightness and color gamut, and the number of laser light sources is also limited by a volume of a projection optical engine, so that the performance design of the optical engine has many limitations.

For example, light sources used in current projection apparatuses are all array laser light sources composed of a plurality of laser chips, which have higher power and smaller volume compared with a single laser light source, thereby promoting miniaturization of the projection apparatus. Although these laser packages make the light source of the projection apparatus more integrated starting from the number and types of chips, these laser light sources do not consider adaptability between the optical etendue and an optical engine of the projection apparatus, and the collimated emitted laser beams cause a loss of extent when being homogenized by the light homogenizing device. Since an angle of the light beam emitted by the laser light source is single, dilution of the optical etendues caused when different light homogenizing devices perform homogenization is different, thereby limiting brightness of the projection apparatus and causing many limitations in design of the projection apparatus.

To solve the above problems, the present disclosure first provides a laser light source. The laser light source according to the present disclosure includes at least two laser units. Each of the laser units includes a laser chip array and a fast-axis collimator lens disposed corresponding to the laser chip array, and the fast-axis collimator lens is configured to collimate a light beam emitted from the laser chip array along a fast-axis direction. A focal length of the fast-axis collimator lens of at least one of the laser units is different from a focal length of the fast-axis collimator lens of at least another of the laser units.

The fast-axis collimator lens is the most important optical component in a beam shaping system of the laser unit. A lens of the fast-axis collimator lens is made of high-quality glass, has a cylindrical surface, and has high transmittance and excellent collimation characteristics. The laser chip array is composed of a plurality of laser chips arranged in strips, and the number of laser chips emitting light in the laser chip array may be controlled by a light source control device. The light source control device may be configured to control the corresponding number of laser chips in the laser chip array to operate based on brightness of a light source required by the projection apparatus.

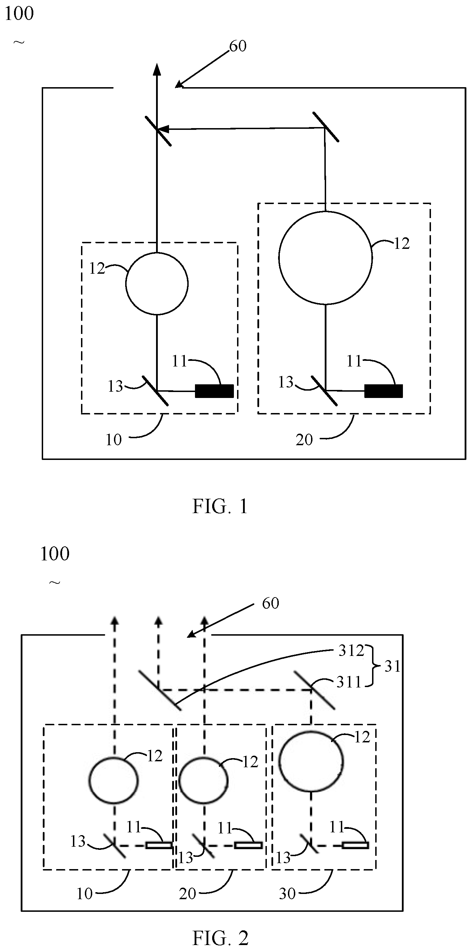

Referring to FIG. 1, FIG. 1 is a schematic plan view of an optical path of a laser light source according to a first embodiment of the present disclosure. As shown in FIG. 1, taking the laser light source 100 in FIG. 1 as an example, the laser light source 100 in the present embodiment includes two laser units, which are respectively a first laser unit 10 and a second laser unit 20. Both the first laser unit 10 and the second laser unit 20 include a laser chip array 11 and a fast-axis collimator lens 12 disposed corresponding to the laser chip array. A focal length of the fast-axis collimator lens 12 in the first laser unit 10 is different from a focal length of the fast-axis collimator lens 12 in the second laser unit 20.

In the present embodiment, the focal length f1 of the fast-axis collimator lens 12 in the first laser unit 10 is smaller than the focal length f2 of the fast-axis collimator lens 12 in the second laser unit 20.

Preferably, the laser unit may be located at a focal point of a corresponding fast-axis collimator lens. Optionally, the laser unit may also be located in the optical path before or after a focal point of a corresponding fast-axis collimator lens. At this time, the fast-axis collimator lens can still achieve a certain collimating effect, but the collimating effect is degraded to a certain extent compared with that when the laser unit is located at the focal point.

In the present embodiment, the laser light source 100 can emit laser beams of different angles by turning on the first laser unit 10 having a smaller focal length, or turning on the second laser unit 20 having a larger focal length, or simultaneously turning on the first laser unit 10 and the second laser unit 20. Further, if the color of the laser chip array 11 in the first laser unit 10 is different from the color of the laser chip array 11 in the second laser unit 20, the laser light source 100 of the present embodiment can further realize emitting laser beams having different color gamuts. Therefore, compared with the prior art, the laser light source 100 of the present embodiment can be adapted to two or more types of projection apparatuses with different requirements.

Optionally, based on the above embodiment, the laser light source further includes a plurality of first light redirecting members. Each of the first light redirecting members is provided in an optical path of a corresponding laser unit, and is configured to reflect a light beam emitted by the laser chip array in the laser unit to a corresponding fast-axis collimator lens for collimation.

Taking the laser light source 100 including two laser units in FIG. 1 as an example, as shown in FIG. 1, both the first laser unit 10 and the second laser unit 20 are provided with a first light redirecting member 13 in optical paths thereof. The first light redirecting member 13 is configured to reflect light beams emitted by the laser chip arrays 11 in the first laser unit 10 and the second laser unit 20 to the corresponding fast-axis collimator lens 12 for collimation.

In the present embodiment, the first light redirecting member 13 may be configured as a reflector, and is configured to reflect the light beams emitted by the laser chip arrays 11 in the first laser unit 10 and the second laser unit 20 to the corresponding fast-axis collimator lens 12 for collimation. In the present embodiment, the number of the first light redirecting members 13 is consistent with the number of the laser units in the laser light source 100.

In some embodiments, if the fast-axis collimator lens 12 is provided in an optical path of an optical axis of the laser chip array 11, the first light redirecting member 13 may be omitted.

Optionally, in some embodiments, the laser light source is further provided with a light exit port. Laser beams emitted by the laser units located within a range of the light exit port pass through a corresponding fast-axis collimator lens and are emitted through the light exit port. A second light redirecting member is provided in an optical path of each laser unit away from the light exit port, and is configured to guide a laser beam of each laser unit away from the light exit port, after passing through a corresponding fast-axis collimator lens, into the range of the light exit port, so as to enable the laser beam of the laser unit away from the light exit port to be emitted along the light exit port from between optical axes of the laser units located within the range of the light exit port.

The second light redirecting member includes a reflective element and a first dichroic element arranged parallel to each other. The reflective element is provided on an optical axis of a corresponding laser unit away from the light exit port, and the first dichroic element is provided between optical axes of the laser units located within the range of the light exit port and is located in a reflected optical path of the reflective element.

The laser light source includes a first laser unit, a second laser unit and a third laser unit. The first laser unit and the second laser unit are provided within the range of the light exit port. The third laser unit is provided away from the light exit port. The reflective element is correspondingly provided on an optical axis of the third laser unit. The first dichroic element is provided at a central position between an optical axis of the first laser unit and an optical axis of the second laser unit and is located in the reflected optical path of the reflective element.

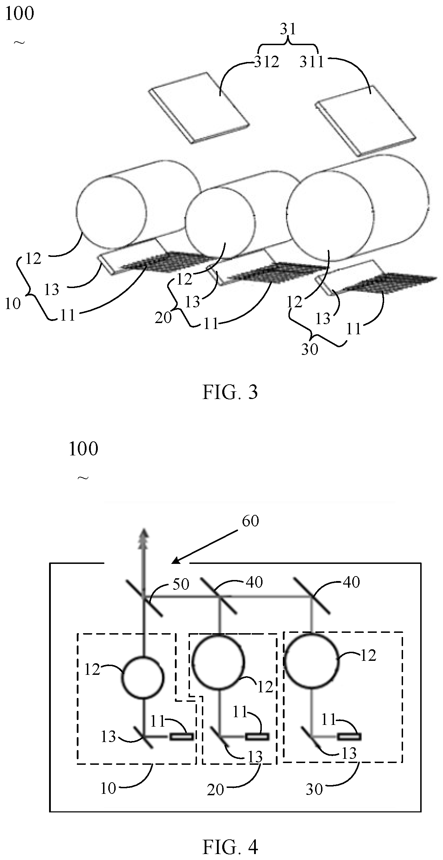

Referring to FIG. 2 and FIG. 3, FIG. 2 is a schematic plan view of an optical path of a laser light source according to a second embodiment of the present disclosure, and FIG. 3 is a schematic perspective structural diagram of a laser light source according to the second embodiment of the present disclosure. As shown in FIG. 2 and FIG. 3, taking the laser light source in FIG. 2 and FIG. 3 as an example, the laser light source 100 of the present embodiment includes three laser units, which are respectively a first laser unit 10, a second laser unit 20 and a third laser unit 30. The first laser unit 10, the second laser unit 20 and the third laser unit 30 each include a laser chip array 11 and a fast-axis collimator lens 12 disposed corresponding to the laser chip array 11. A focal length of the fast-axis collimator lens 12 of the third laser unit 30 is different from focal lengths of the fast-axis collimator lenses 12 of the first laser unit 10 and the second laser unit 20. In the present embodiment, the relationship among the focal length f1 of the fast-axis collimator lens 12 in the first laser unit 10, the focal length f2 of the fast-axis collimator lens 12 in the second laser unit 20, and the focal length f3 of the fast-axis collimator lens 12 in the third laser unit 30 satisfies: f1 = f2 < f3.

As shown in FIG. 2, the laser light source of the present embodiment is provided with a light exit port 60. The first laser unit 10 and the second laser unit 20 are provided within a range of the light exit port 60 of the laser light source 100. That is, laser beams emitted by the first laser unit 10 and the second laser unit 20 can be directly emitted through the light exit port 60 after passing through respective corresponding fast-axis collimator lenses 12. Since the third laser unit 30 is provided away from the light exit port 60, a second light redirecting member 31 needs to be provided in an optical path of the third laser unit 30. In this case, after the laser beam emitted by the third laser unit 30 is collimated by the corresponding fast-axis collimator lens 12, the laser beam needs to be reflected by the corresponding second light redirecting member 31, so that the laser beam emitted by the third laser unit 30 is emitted along the light exit port 60 from between optical axes of the first laser unit 10 and the second laser unit 20 located within the range of the light exit port 60. That is, in the laser light source 100 of the present embodiment, light beams of the three laser units are emitted through the light exit port 60 in different axes.

In particular, in the present embodiment, the second light redirecting member 31 includes a reflective element 311 and a first dichroic element 312 arranged parallel to each other. In the present embodiment, the reflective element 311 may be a reflector, and the first dichroic element 312 may be a dichroic mirror. The reflective element 311 is provided on an optical axis of the corresponding third laser unit 30 away from the light exit port. The first dichroic element 312 is provided between optical axes of the first laser unit 10 and the second laser unit 20 located within the range of the light exit port 60 and is located in the reflected optical path of the reflective element 311.

Preferably, the first dichroic element 312 may be arranged at a central position between the optical axes of the first laser unit 10 and the second laser unit 20 located within the range of the light exit port 60 and is located in the reflected optical path of the reflective element. It should be noted herein that the central position is not an absolutely intermediate position, and an error may exist. If the first laser unit 10, the second laser unit 20, and the third laser unit 30 are different-color light sources, providing the first dichroic element 312 at the central position can make the color of the formed laser beams more uniform.

In some embodiments, if the first laser unit 10, the second laser unit 20, and the third laser unit 30 are same-color light sources, a dichroic mirror may not be adopted, and other elements such as a polarized mirror may be adopted to reflect the laser beam.

In some embodiments, if a plurality of laser units away from the light exit port are provided, a corresponding number of second light redirecting members 31 need to be provided, and corresponding first dichroic elements 312 may be uniformly spaced between optical axes of the laser units located within the range of the light exit port 60.

Optionally, the at least two laser units include a first laser unit and a second laser unit. The first laser unit is provided within the range of the light exit port. The second laser unit is provided away from the light exit port. A focal length of a fast-axis collimator lens of the second laser unit is greater than a focal length of a fast-axis collimator lens of the first laser unit.

Referring to FIG. 1, as shown in FIG. 1, the first laser unit 10 is provided within the range of the light exit port 60. The second laser unit 20 is provided away from the light exit port 60. The focal length of the fast-axis collimator lens 12 of the second laser unit 20 is greater than the focal length of the fast-axis collimator lens 12 of the first laser unit 10.

In some embodiments, if the laser light source 100 includes a plurality of laser units, the farther the laser unit is away from the light exit port 60, the greater the focal length of the fast-axis collimator lens in the laser unit is. Such an arrangement can cause a laser beam formed by the laser light source 100 to form a smaller light spot after light combining.

Optionally, in some embodiments, the laser light source is provided with a light exit port. The laser light source further includes a beam combining element and a plurality of third light redirecting members arranged parallel to each other. The beam combining element is provided in an optical path of one of the laser units at the light exit port. Each of the third light redirecting members is correspondingly provided in an optical path of another one of remaining laser units, and is configured to reflect a laser beam emitted by a corresponding laser unit to the beam combining element, and transmit laser beams emitted by other laser units and passing through the third light redirecting member. The beam combining element is configured to combine laser beams of all the laser units and emit the combined laser beams through the light exit port.

Referring to FIG. 4, FIG. 4 is a schematic plan view of an optical path of a laser light source according to a third embodiment of the present disclosure. The laser light source 100 of the present embodiment is also provided with a light exit port 60. Taking the laser light source in FIG. 4 as an example, the laser light source 100 of the present embodiment also includes three laser units, which are respectively a first laser unit 10, a second laser unit 20 and a third laser unit 30. The first laser unit 10, the second laser unit 20 and the third laser unit 30 also each include a laser chip array 11 and a fast-axis collimator lens 12 disposed corresponding to the laser chip array 11. A focal length of the fast-axis collimator lens 12 of the first laser unit 10 is different from focal lengths of the fast-axis collimator lenses 12 of the second laser unit 20 and the third laser unit 30. In the present embodiment, the relationship among the focal length f1 of the fast-axis collimator lens 12 in the first laser unit 10, the focal length f2 of the fast-axis collimator lens 12 in the second laser unit 20, and the focal length f3 of the fast-axis collimator lens 12 in the third laser unit 30 satisfies: f1 < f2 = f3.

The laser light source 100 of the present embodiment further includes a beam combining element 50 and two third light redirecting members 40. The beam combining element 50 is provided in an optical path of the first laser unit 10 located at the light exit port 60. The two third light redirecting members 40 are respectively provided in optical paths of the second laser unit 20 and the third laser unit 30, and are configured to reflect laser beams emitted from the second laser unit 20 and the third laser unit 30 to the beam combining element 50. The beam combining element 50 is configured to combine laser beams of the first laser unit 10, the second laser unit 20, and the third laser unit 30 and emit the combined laser beams through the light exit port 60. That is, in the present embodiment, light beams of the three laser units are coaxially emitted through the light exit port 60.

Optionally, the laser light source includes a red laser unit, a green laser unit, and a blue laser unit. A focal length of the fast-axis collimator lens of the red laser unit is smaller than focal lengths of the fast-axis collimator lenses of the green laser unit and the blue laser unit.

Referring to FIG. 4, if the laser light source 100 is a different-color light source, the first laser unit 10, the second laser unit 20, and the third laser unit 30 need to be configured as laser units of different colors. However, a fast-axis divergence angle of a red laser chip is greater than a fast-axis divergence angle of a green laser chip of the green laser unit and a fast-axis divergence angle of a blue laser chip of the blue laser unit. Since the fast-axis divergence angle of the red laser chip is greater than fast-axis divergence angles of the blue-green lasers, the laser beam after being collimated with the same focal length has a poor light homogenizing effect after passing through the light homogenizing device. Therefore, in the present embodiment, the first laser unit 10 is configured as a red laser chip, the second laser unit 20 is configured as a green laser chip, and the third laser unit 30 is configured as a blue laser chip. Since the relationship among the focal length f1 of the fast-axis collimator lens 12 in the first laser unit 10, the focal length f2 of the fast-axis collimator lens 12 in the second laser unit 20, and the focal length f3 of the fast-axis collimator lens 12 in the third laser unit 30 satisfies: f1 < f2 = f3, such an arrangement can enable laser light spots incident from the first laser unit 10, the second laser unit 20, and the third laser unit 30 onto the light homogenizing device to have the sufficient number of homogenizing times, so that the homogenizing effect is better.

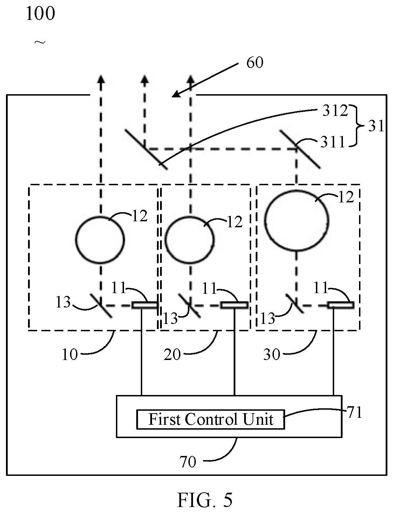

Optionally, referring to FIG. 5, FIG. 5 is a schematic structural diagram of a laser light source according to a fourth embodiment of the present disclosure. Based on any of the above embodiments, in the present embodiment, the laser light source 100 further includes a light source control device 70. The light source control device 70 is connected to each of the laser units, and is configured to control at least one of the laser units to operate, so as to cause light exiting angles of emitted light of the laser light source to be different.

In some embodiments, the light source control device 70 may further be configured to control at least a portion of the laser chips in the laser chip array 11 to operate, so as to cause the light exiting angles of the emitted light of the laser light source to be different.

Optionally, in the present embodiment, the light source control device 70 includes a first control unit 71. The first control unit 71 controls at least a portion of the laser units to be turned on based on a light spot requirement. The laser light source 100 includes a first laser unit 10, a second laser unit 20, and a third laser unit 30. The relationship among the focal length f1 of the fast-axis collimator lens 12 in the first laser unit 10, the focal length f2 of the fast-axis collimator lens 12 in the second laser unit 20, and the focal length f3 of the fast-axis collimator lens 12 in the third laser unit 30 satisfies: f1 = f2 < f3. The first control unit 71 controls the third laser unit 30 to operate in response to a light spot formed by light beams emitted by the first laser unit 10 and the second laser unit 20 failing to satisfy the light spot requirement.

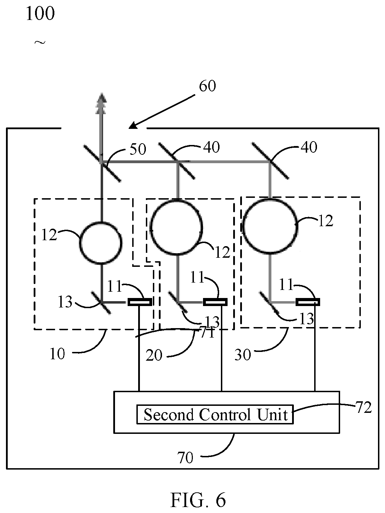

As shown in FIG. 5, taking controlling the laser light source 100 in FIG. 2 as an example, in the present embodiment, when the light spot formed by the light beams emitted by the first laser unit 10 and the second laser unit 20 does not satisfy the light spot requirement, that is, when an area of the light spot formed by the light beams emitted by the first laser unit 10 and the second laser unit 20 is small, the light beams emitted by the first laser unit 10 and the second laser unit 20 may be insufficiently filled to the center of the light homogenizing device. In this case, the third laser unit 30 needs to be controlled to operate. By controlling the number of the laser chips turned on in the third laser unit 30, the light spot formed by the light beams emitted by the third laser unit 30 can just compensate for the unfilled area, thereby further improving the light homogenizing effect of the light homogenizing device. Optionally, referring to FIG. 6, FIG. 6 is a schematic structural diagram of a laser light source according to a fifth embodiment of the present disclosure. As shown in FIG. 6, the light source control device 70 includes a second control unit 72. The second control unit 72 controls at least a portion of the laser chips in the laser units to be turned on based on a light source brightness requirement.

The second control unit 72 controls the laser chip array in the laser units to control the laser chips to operate in a manner of turning on chips incrementally from a middle to two sides based on the light source brightness requirement.

As shown in FIG. 6, taking controlling the laser light source 100 in FIG. 4 as an example, in the present embodiment, the number of laser chips that operate is determined by brightness of the light source required by a projection apparatus applying the laser light source 100. In the laser chip array 11, an increase in the number of laser chips that operate may adopt a manner of incrementally turning on laser chips from the middle toward two sides, which can ensure that an optical axis of a laser beam emitted by the laser unit after being collimated by the fast-axis collimator lens 12 and emitted through the light exit port 60 does not deviate, and also enable a light homogenizing device (not shown in the drawings) located at the light exit port 60 to have a better light homogenizing effect. In the present embodiment, the light source control device 70 matches projection optical engines with different brightness by controlling the number of laser chips that operate in the laser chip array 11. A light source with the same brightness may have multiple combination manners. For example, n1 laser chips in the laser chip array 11 in the first laser unit 10 and n2 laser chips in the laser chip array 11 in the second laser unit 20 may be turned on simultaneously, or only n3 laser chips in the laser chip array 11 in the third laser unit 30 may be turned on, where n3 = n1 + n2; or m1 laser chips in the laser chip array 11 in the first laser unit 10, m2 laser chips in the laser chip array 11 in the second laser unit 20, and m3 laser chips in the laser chip array 11 in the third laser unit 30 may be turned on simultaneously, where n3 = n1 + n2 = m1 + m2 + m3.

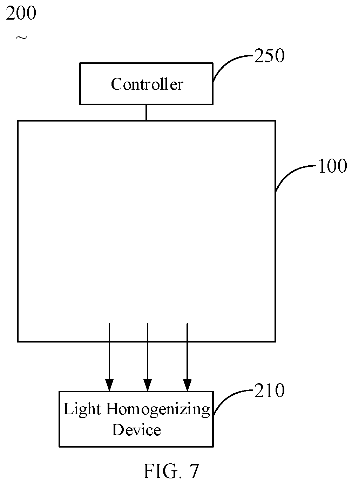

Optionally, the present disclosure further provides a projection apparatus. Referring to FIG. 7, FIG. 7 is a schematic structural diagram of a projection apparatus according to a first embodiment of the present disclosure. As shown in FIG. 7, the projection apparatus 200 according to the present embodiment includes the laser light source 100 according to any one of the above embodiments.

Optionally, as shown in FIG. 7, the projection apparatus 200 further includes a first light homogenizing device 210 and a controller 250. The controller 250 is configured to control at least a portion of the laser chips in at least a portion of the laser chip arrays in the laser light source 100 to operate, so as to match a light receiving angle of the first light homogenizing device 210.

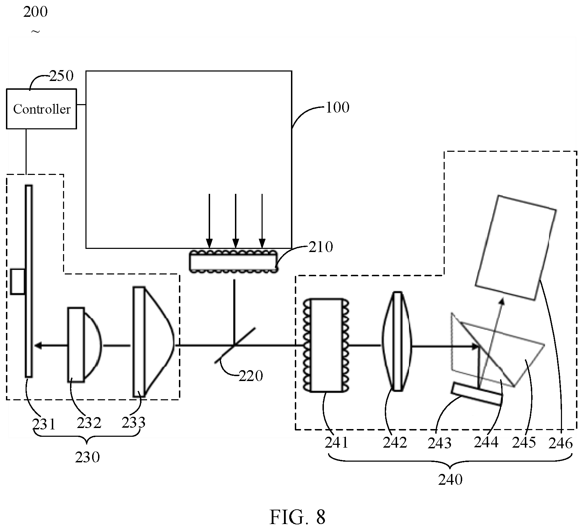

Optionally, referring to FIG. 8, FIG. 8 is a schematic structural diagram of a projection apparatus according to a first embodiment of the present disclosure. As shown in FIG. 8, if the laser chip arrays 11 of all laser units in the laser light source 100 comprise same-color laser chips, the projection apparatus 200 further includes a second dichroic element 220, a fluorescent projection module 230, and a projection module 240. The fluorescent projection module 230 and the projection module 240 are arranged on two sides of the second dichroic element 220. Laser beams emitted by the laser light source 100 are homogenized by the first light homogenizing device 210 and are incident onto the second dichroic element 220. The second dichroic element 220 reflects the laser beams into the fluorescent projection module 230. The fluorescent projection module 230 absorbs the laser beams and generates corresponding fluorescent light beams, and the fluorescent light beams are transmitted through the dichroic element 220 and emitted to the projection module 240. The projection module 240 performs projection based on the fluorescent light beams.

The controller 250 is connected to the fluorescent projection module 230, and is configured to acquire the light receiving angle of the first light homogenizing device 210 based on the fluorescent projection module 230 and to control at least a portion of the laser chips in at least a portion of the laser chip arrays in the laser light source 100 to operate, so as to match the light receiving angle of the first light homogenizing device 210.

As shown in FIG. 8, in the present embodiment, the fluorescent projection module 230 includes a first lens 233, a second lens 232 and a color wheel 231. Laser beams reflected by the second dichroic element 220 are incident onto the color wheel 231 through the first lens 233 and the second lens 232. The color wheel 231 receives the laser beams and generates fluorescent light beams. The fluorescent light beams are transmitted through the first lens 233, the second lens 232 and the second dichroic element 220 and are incident into the projection module 240.

The projection module 240 includes a second light homogenizing device 241, a relay lens 242, a display chip 243, a first prism 244, a second prism 245 and a projection lens 246. The fluorescent light beams are incident onto the relay lens 242 after passing through the second light homogenizing device 241, are incident onto the first prism 244 after passing through the relay lens 242, and are reflected by the first prism 244 onto the display chip 243. The display chip 243 receives the light beams to form image light beams, and the image light beams are output to the projection lens 246 through the first prism 244 and the second prism 245. The relay lens 242 is configured to control positions of the light beams and expand a focus range thereof.

In an application scenario, taking the laser chip being a blue laser chip as an example, the laser light source 100 of the present embodiment may control at least a portion of the laser chips in at least a portion of the laser chip arrays to operate as described above. That is, by controlling the laser units having fast-axis collimator lenses with different focal lengths to operate, so as to match the light homogenizing devices having different light receiving angles.

In the present embodiment, the projection apparatus 200 may reversely derive the size of a fluorescent light spot on the color wheel 231 through the optical etendue of the fluorescent projection module 230, and may further reversely derive the light receiving angle of the first light homogenizing device 210 from the combined focal length of the first lens 233 and the second lens 232. Therefore, it can be seen that the first light homogenizing devices 210 of projection apparatuses 200 with different etendues have different light receiving angles. In the present embodiment, as described above, the laser light source 100 includes at least two laser units. The focal length of the fast-axis collimator lens of at least one of the laser units is different from the focal length of the fast-axis collimator lens of at least another of the laser units. In the present embodiment, the controller 250 of the laser light source 100 may control the laser light source 100 to match the first light homogenizing device 210 having different light receiving angles by turning on laser units having different focal lengths.

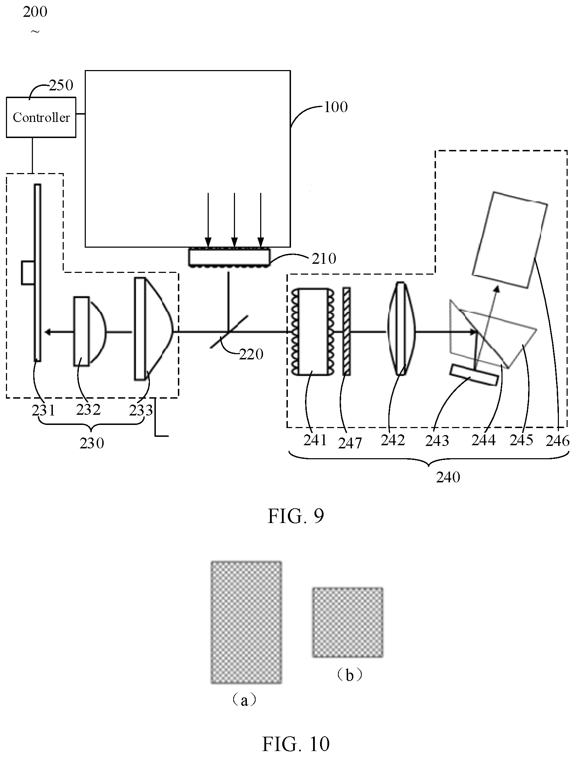

Optionally, referring to FIG. 9, FIG. 9 is a schematic structural diagram of a projection apparatus according to a third embodiment of the present disclosure. As shown in FIG. 9, compared with the projection apparatus 200 in the embodiment of FIG. 6, the projection apparatus 200 in the present embodiment further includes a polarization device 247, and the polarization device 247 is provided between the second light homogenizing device 241 and the relay lens 242.

Referring to FIG. 10, FIG. 10 is a schematic diagram of a fluorescent light spot on a color wheel of a projection apparatus according to the present disclosure. The fluorescent light spot on the color wheel 231 in the projection apparatus 200 in the embodiment of FIG. 8 is shown in FIG. 8(a), and is a rectangular uniform light spot close to 16:9. Compared with the projection apparatus 200 in the embodiment of FIG. 7, the projection apparatus 200 in the embodiment of FIG. 9 is additionally provided with the polarization device 247. The fluorescent light spot on the color wheel 231 in the embodiment of FIG. 7 is close to a square due to the dilution of the optical etendue caused by the polarization device 247, as shown in FIG. 10 (b).

It is assumed that, in the embodiment in FIG. 8, an area of a laser light spot of the laser light source 100 incident onto the first light homogenizing device 210 is S1, and an angle of the laser beam is a1, and in the embodiment of FIG. 9, an area of a laser light spot of the laser light source 100 incident onto the first light homogenizing device 210 is S2, and an angle of the laser beam is a2. The projection apparatuses 200 in the embodiments of FIG. 8 and FIG. 9 have the same fluorescent projection module 230 except for the polarization device 247, that is, S1 = S2. Due to the influence of the Polarization Conversion System (PCS) device, the shape and size of the fluorescent light spots on the color wheel 231 are different. In this case, the light receiving angle of the first light homogenizing device 210 may be calculated according to the first lens 233 and the second lens 232. Therefore, it may be determined that the angle a1 of the laser beam in the embodiment of FIG. 8 is greater than the angle a2 of the laser beam in the embodiment of FIG. 9.

That is, in the projection apparatus 200 in the embodiment of FIG. 8, when the light receiving angle of the first light homogenizing device 210 is a relatively large angle a1, the laser unit having a relatively small focal length of the fast-axis collimator lens may be turned on through the controller 250. In the projection apparatus 200 in the embodiment of FIG. 9, when the light receiving angle of the first light homogenizing device 210 is a relatively small angle a2, the laser unit having a relatively large focal length of the fast-axis collimator lens is turned on through the controller 250. Taking the laser light source 100 in Fig. 2 as an example of the laser light source of the projection apparatus 200, the relationship among the focal length f1 of the fast-axis collimator lens 12 in the first laser unit 10, the focal length f2 of the fast-axis collimator lens 12 in the second laser unit 20, and the focal length f3 of the fast-axis collimator lens 12 in the third laser unit 30 in the embodiment of FIG. 2 satisfies: f1 = f2 < f3. When the light receiving angle of the first light homogenizing device 210 is a relatively large angle a1, the light source control device 70 is controlled to turn on the first laser unit 10 and the second laser unit 20 having relatively small focal lengths of the fast-axis collimator lenses 12 in the embodiment of FIG. 2. When the light receiving angle of the first light homogenizing device 210 is a relatively small angle a2, the light source control device 70 is controlled to turn on the third laser unit 30 having a relatively large focal length of the fast-axis collimator lens 12 in the embodiment of FIG. 2.

Further, in addition to affecting the incident light beam angle of the laser beam before entering the first light homogenizing device 210, the focal length of the fast-axis collimator lens 12 in the laser unit also affects the incident light spot area of the laser beam before entering the first light homogenizing device 210. In the present embodiment, if laser units having different focal lengths are selected to operate, while maintaining the same number of activated laser chips in the laser chip arrays, the incident light spot area of the laser beam before entering the first light homogenizing device 210 is different.

Taking the laser light source 100 in FIG. 2 as an example of the laser light source of the projection apparatus 200, when the light receiving angle of the first light homogenizing device 210 is the relatively large angle a1, the first laser unit 10 and the second laser unit 20 having relatively small focal lengths of the fast-axis collimator lenses 12 in the embodiment of FIG. 2 are turned on through the controller 250. When the light receiving angle of the first light homogenizing device 210 is the relatively small angle a2, the third laser unit 30 having a relatively large focal length of the fast-axis collimator lens 12 in the embodiment of FIG. 2 is turned on through the controller 250. Since different focal lengths affect the incident light spot area of the laser beam before entering the first light homogenizing device 210, in order to make the sum S1 of the laser light spot areas emitted by the laser light source 100 in the embodiment of FIG. 8 exactly equal to the laser light spot area S2 of the laser light source 100 in the embodiment of FIG. 9, in this case, it is necessary to increase the number of activated laser chips in the laser chip array 11 in the first laser unit 10 and the second laser unit 20 in the laser light source 100 of the embodiment of FIG. 8, thereby ensuring that the first light homogenizing device 210 has a better light homogenizing effect. In the laser light source 100 in the embodiment of FIG. 8, it is necessary to ensure that the number of activated laser chips in the laser chip array 11 in the first laser unit 10 and the second laser unit 20 is the same.

In some embodiments, when the light receiving angle of the first light homogenizing device 210 is the relatively large angle a1, three laser units of the laser light source 100 in the embodiment of FIG. 2 may also be turned on simultaneously. Since S1 is the sum of the laser light spot areas emitted by the first laser unit 10 and the second laser unit 20, insufficient filling may occur at the center of the first light homogenizing device 210. Therefore, the third laser unit 30 is turned on simultaneously, and by controlling the number of the laser chips turned on in the laser chip array 11 in the third laser unit 30, the laser light spot formed by the laser beams emitted by the laser light source 100 can just compensate for the unfilled area, thereby further improving the light homogenizing effect of the first light homogenizing device 210.

In the projection apparatus 200 of the present embodiment, the laser light source 100 of the present embodiment, by designing the laser units having fast-axis collimator lenses 12 with different focal lengths, and then controlling at least a portion of laser chips in at least a portion of the laser chip arrays 11 to operate through the light source control device 70, can adjust a laser light spot size and a laser beam angle of the laser light source 100, thereby enabling the projection apparatus 200 to be flexibly adapted to different projection requirements.

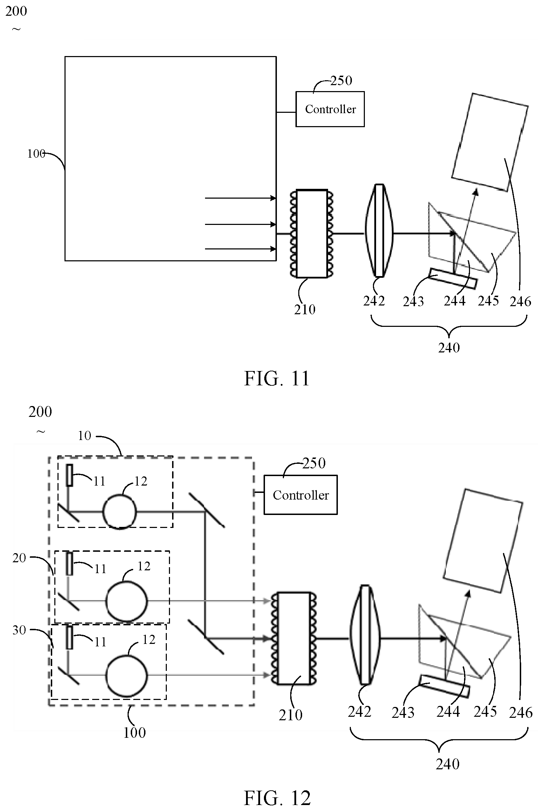

Optionally, referring to FIG. 11, FIG. 11 is a schematic structural diagram of a projection apparatus according to a fourth embodiment of the present disclosure. As shown in FIG. 11, if the laser chip array 11 of the laser unit includes different-color laser chips, the projection apparatus 200 further includes a projection module 240. The projection module 240 includes a relay lens 242, a display chip 243, a first prism 244, a second prism 245, and a projection lens 246. The laser beam is incident onto the relay lens 242 after passing through the first light homogenizing device 210, are incident onto the first prism 244 after passing through the relay lens 242, and are reflected by the first prism 244 onto the display chip 243. The display chip 243 receives the light beam to form image light beams, and the image light beams are output to the projection lens 246 through the first prism 244 and the second prism 245. The relay lens 242 is configured to control positions of the light beams and expand a focus range thereof. The controller 250 is connected to the laser light source 100, and is configured to control at least a portion of the laser chips in at least a portion of the laser chip arrays in the laser light source 100 to operate, based on the light receiving angle of the first light homogenizing device 210, to match the light receiving angle of the first light homogenizing device 210.

That is, if the laser chip array 11 of the laser unit includes different-color laser chips, there is no need to provide the fluorescent projection module 230.

In the present embodiment, the laser light source 100 may be the laser light source 100 according to any one of the above embodiments.

In an application scenario, referring to FIG. 12, FIG. 12 is a schematic structural diagram of a projection apparatus according to a fifth embodiment of the present disclosure. As shown in FIG. 12, the laser light source 100 in the present embodiment includes three laser units. The first laser unit 10 is a blue laser chip, the second laser unit 20 is a green laser chip, and the third laser unit 30 is a red laser chip. In the present embodiment, the relationship among the focal length f1 of the fast-axis collimator lens 12 in the first laser unit 10, the focal length f2 of the fast-axis collimator lens 12 in the second laser unit 20, and the focal length f3 of the fast-axis collimator lens 12 in the third laser unit 30 satisfies: f1 = f2 < f3. In addition, the laser beam of the first laser unit 10, the laser beam of the second laser unit 20, and the laser beam of the third laser unit 30 are similar in structure to those in the embodiment in FIG. 2, and the laser beams are all emitted in different axes through the light exit port. In the present embodiment, since the fast-axis divergence angle of the red laser chip is greater than the fast-axis divergence angles of the blue-green lasers, after the laser beam of the red laser chip is collimated by the fast-axis collimator lens 12 having the same focal length and then passes through the first light homogenizing device 210, the homogenizing effect thereof is poorer compared with the laser beams of the blue-green lasers. In the present embodiment, the focal length f3 of the fast-axis collimator lens 12 in the third laser unit 30 is configured to be greater than the focal length f1 of the fast-axis collimator lens 12 in the first laser unit 10 and the focal length f2 of the fast-axis collimator lens 12 in the second laser unit 20, thereby enabling all laser beams incident onto the first light homogenizing device 210 to have sufficient light homogenizing times, so that the homogenizing effect becomes better. In addition, in the projection apparatus 200 of the present embodiment, the laser light source 100 may further control the number of laser chips that operate in the laser chip arrays 11 in the first laser unit 10, the second laser unit 20, and the third laser unit 30 through the light source control device, thereby combining white light sources with different color gamuts and different brightness.

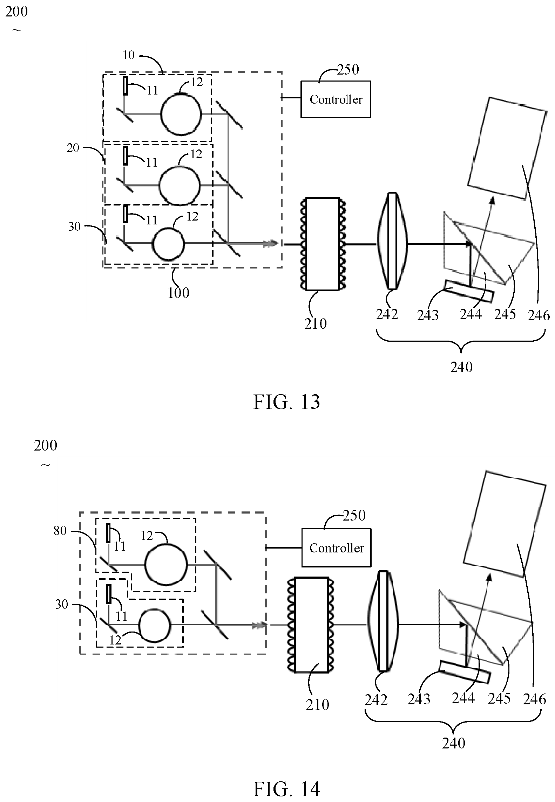

Optionally, referring to FIG. 13, FIG. 13 is a schematic structural diagram of a projection apparatus according to a sixth embodiment of the present disclosure. In the present embodiment, the first laser unit 10, the second laser unit 20, and the third laser unit 30 may be configured according to the structure in the embodiment of FIG. 4, and laser beams of the three laser units are combined and then emitted from the light exit port.

Optionally, since the focal lengths of the fast-axis collimator lenses of the first laser unit and the second laser unit are the same, referring to FIG. 14, FIG. 14 is a schematic structural diagram of a projection apparatus according to a seventh embodiment of the present disclosure. As shown in FIG. 14, the first laser unit and the second laser unit may be combined into the same fourth laser unit 80 through a beam splitter. Laser chips in the laser chip array 11 in the fourth laser unit 80 include a blue laser chip and a green laser chip.

Based on the embodiments of FIG. 11 to FIG. 14, in these embodiments, the laser light source 100 may design laser units having fast-axis collimator lenses 12 with different focal lengths, and then control at least a portion of the laser chips in laser chip arrays 11 of different colors to operate through the light source control device 70, so that the laser light source 100 can directly emit white light sources having different color gamuts and different brightness, thereby enabling the projection apparatus 200 to be flexibly adapted to various different projection requirements.

The above are merely embodiments of the present disclosure, and are not intended to limit the patent scope of the present disclosure. Any equivalent structure or equivalent process transformation made by using the specification and the drawings of the present disclosure, or directly or indirectly applied in other related technical arts, shall similarly fall within the patent protection scope of the present disclosure.

## Claims

1. A laser light source, comprising at least two laser units, wherein each of the laser units comprises a laser chip array and a fast-axis collimator lens disposed corresponding to the laser chip array, and the fast-axis collimator lens is configured to collimate a light beam emitted from the laser chip array along a fast-axis direction; and
wherein a focal length of the fast-axis collimator lens of at least one of the laser units is different from a focal length of the fast-axis collimator lens of at least another of the laser units.

2. The laser light source according to claim 1, further comprising a light source control device, wherein the light source control device is connected to each of the laser units, and the light source control device is configured to control at least one of the laser units to operate, so as to cause light exiting angles of emitted light of the laser light source to be different.

3. The laser light source according to claim 2, wherein the light source control device is configured to control at least a portion of laser chips in the laser chip array to operate, so as to cause the light exiting angles of the emitted light of the laser light source to be different.

4. The laser light source according to claim 3, wherein the light source control device comprises a first control unit, and the first control unit is configured to control at least a portion of the laser units to be turned on based on a light spot requirement; and/or
the light source control device comprises a second control unit, and the second control unit is configured to control at least a portion of the laser chips in the laser units to be turned on based on a light source brightness requirement.

5. The laser light source according to claim 4, further comprising a first laser unit, a second laser unit, and a third laser unit, wherein a focal length of a fast-axis collimator lens of the first laser unit and a focal length of a fast-axis collimator lens of the second laser unit are smaller than a focal length of a fast-axis collimator lens of the third laser unit, and
the first control unit is configured to control the third laser unit to operate in response to a light spot formed by light beams emitted by the first laser unit and the second laser unit failing to satisfy the light spot requirement.

6. The laser light source according to claim 4, wherein the second control unit is configured to control the laser chip array in the laser units to control the laser chips to operate in a manner of turning on chips incrementally from a middle to two sides based on the light source brightness requirement.

7. The laser light source according to claim 1, further comprising a plurality of first light redirecting members, wherein each of the plurality of first light redirecting members is provided in an optical path of a corresponding one of the laser units, and is configured to reflect a light beam emitted by the laser chip array in at least one of the laser units to a corresponding fast-axis collimator lens for collimation.

8. The laser light source according to claim 1, wherein the laser light source is provided with a light exit port, laser beams emitted by the laser units located within a range of the light exit port pass through a corresponding fast-axis collimator lens and are emitted through the light exit port, a second light redirecting member is provided in an optical path of each of the laser units away from the light exit port, and the second light redirecting member is configured to guide a laser beam of each of the laser units away from the light exit port, after passing through a corresponding fast-axis collimator lens, into the range of the light exit port, so as to enable the laser beam of each of the laser units away from the light exit port to be emitted along the light exit port from between optical axes of the laser units located within the range of the light exit port.

9. The laser light source according to claim 8, wherein the second light redirecting member comprises a reflective element and a first dichroic element arranged parallel to each other, the reflective element is provided on an optical axis of a corresponding laser unit away from the light exit port, and the first dichroic element is provided between optical axes of the laser units located within the range of the light exit port and is located in a reflected optical path of the reflective element.

10. The laser light source according to claim 9, comprising a first laser unit, a second laser unit, and a third laser unit, wherein the first laser unit and the second laser unit are provided within the range of the light exit port, the third laser unit is provided away from the light exit port, the reflective element is correspondingly provided on an optical axis of the third laser unit, and the first dichroic element is provided at a central position between an optical axis of the first laser unit and an optical axis of the second laser unit and is located in the reflected optical path of the reflective element.

11. The laser light source according to claim 8, wherein the at least two laser units comprise a first laser unit and a second laser unit, the first laser unit is provided within the range of the light exit port, the second laser unit is provided away from the light exit port, and a focal length of a fast-axis collimator lens of the second laser unit is greater than a focal length of a fast-axis collimator lens of the first laser unit.

12. The laser light source according to claim 1, wherein the laser light source is provided with a light exit port, the laser light source further comprises a beam combining element and a plurality of third light redirecting members arranged parallel to each other, the beam combining element is provided in an optical path of one of the laser units located at the light exit port, each of the third light redirecting members is correspondingly provided in an optical path of at least one of remaining laser units, and is configured to reflect a laser beam emitted by the at least another one of the laser units to the beam combining element and transmit laser beams emitted by other laser units and passing through the third light redirecting member, and the beam combining element is configured to combine laser beams of all the laser units and emit the combined laser beams through the light exit port.

13. The laser light source according to claim 12, further comprising a red laser unit, a green laser unit, and a blue laser unit, wherein a focal length of a fast-axis collimator lens of the red laser unit is smaller than a focal length of a fast-axis collimator lens of the green laser unit and a focal length of a fast-axis collimator lens of the blue laser unit.

14. A projection apparatus, comprising the laser light source according to any one of claims 1 to 12.

15. The projection apparatus according to claim 14, further comprising a first light homogenizing device and a controller, wherein the controller is configured to control at least a portion of the laser chips in at least a portion of the laser chip arrays in the laser light source to operate, so as to match a light receiving angle of the first light homogenizing device.

16. The projection apparatus according to claim 15, wherein the laser chip arrays of all the laser units comprise same-color laser chips, the projection apparatus further comprises a second dichroic element, a fluorescent projection module, and a projection module, and the fluorescent projection module and the projection module are arranged on two sides of the second dichroic element; and
laser beams emitted by the laser light source are incident onto the second dichroic element after being homogenized by the first light homogenizing device; the second dichroic element reflects the laser beams into the fluorescent projection module, the fluorescent projection module absorbs the laser beams and generates corresponding fluorescent light beams, and the fluorescent light beams are transmitted through the second dichroic element and emitted to the projection module; and the projection module performs projection based on the fluorescent light beams,
wherein the controller is connected to the fluorescent projection module and the laser light source, and is configured to acquire the light receiving angle of the first light homogenizing device based on the fluorescent projection module and to control at least a portion of the laser chips in at least a portion of the laser chip arrays in the laser light source to operate, so as to match the light receiving angle of the first light homogenizing device.

17. The projection apparatus according to claim 16, wherein the fluorescent projection module comprises a first lens, a second lens and a color wheel; and
the laser beams reflected by the second dichroic element are incident onto the color wheel through the first lens and the second lens, the color wheel receives the laser beams and generates the fluorescent light beams, and the fluorescent light beams are transmitted through the first lens, the second lens and the second dichroic element and are incident into the projection module.

18. The projection apparatus according to claim 16, wherein the projection module comprises a second light homogenizing device, a relay lens, a display chip, a first prism, a second prism and a projection lens, and
wherein the fluorescent light beams are incident onto the relay lens after passing through the second light homogenizing device, are incident onto the first prism after passing through the relay lens, and are reflected by the first prism onto the display chip, the display chip receives the fluorescent light beams to form image light beams, and the image light beams are output to the projection lens through the first prism and the second prism.

19. The projection apparatus according to claim 15, wherein the laser chip array of the laser unit comprises different-color laser chips, the projection apparatus further comprises a projection module, and the projection module comprises a relay lens, a display chip, a first prism, a second prism, and a projection lens,
wherein laser beams are incident onto the relay lens after passing through the first light homogenizing device, incident onto the first prism after passing through the relay lens, and reflected by the first prism onto the display chip, the display chip receives the laser beams to form image light beams, and the image light beams are output to the projection lens through the first prism and the second prism, and
wherein the controller is connected to the laser light source, and is configured to control at least a portion of the laser chips in at least a portion of the laser chip arrays in the laser light source to operate based on the light receiving angle of the first light homogenizing device, so as to match the light receiving angle of the first light homogenizing device.
